# FASCICULE DE BREVET EUROPEEN

(11) **EP 3 945 649 B1**
(45) Date de publication et mention de la délivrance du brevet: **04.09.2024**
(21) Numéro de dépôt: 21188643.7
(22) Date de dépôt: 30.07.2021
(51) Int. Cl.: H02G 3/32, F16L 3/227, H02G 3/30

(54) **BLOCHET DE MAINTIEN DE CÂBLES ÉLECTRIQUES**
ZANGE ZUM HALTEN VON ELEKTRISCHEN KABELN
BLOCK FOR HOLDING ELECTRIC CABLES

(30) Priorité: 31.07.2020 FR 2008168
(43) Date de publication de la demande: 02.02.2022
(73) Titulaire: ALSTOM Holdings, 93400 Saint-Ouen-sur-Seine (FR)
(72) Inventeur: MAHLA, Adbelkader, 71300 MONTCEAU LES MINES (FR)
(74) Mandataire: Lavoix

(56) Documents cités:
- EP-A2- 2 360 801
- CN-A- 104 033 659
- DE-A1- 3 939 103
- DE-U- 6 602 716
- DE-U1- 202009 005 647
- DE-U1- 202020 102 150
- JP-A- H08 168 146
- NL-C2- 1 037 999

## Description

La présente invention concerne un blochet de maintien d'au moins un câble électrique du type comprenant un support, le blochet comprenant un corps dans lequel est ménagé au moins un passage pour le ou chaque câble électrique, et
pour chaque passage, un pion déplaçable transversalement dans le passage par rapport au corps entre :
- une position de pincement dans laquelle le câble associé au passage, est enserré entre une surface d'appui et une surface de support portée par le corps, et
- une position escamotée, dans laquelle la circulation du câble associé au passage est libre, le pion étant écarté de la surface de support.

On connait du document EP 2 360 801 A2 un appareil de maintien de câbles électriques. Il comprend un corps et quatre pions déplaçables par rapport au corps pour la retenue des câbles. Le corps comporte un élément de fermeture mâle et un élément de fermeture femelle configurés pour réaliser une fermeture par emboitage élastique. Afin d'éviter des mouvements transverses des câbles électriques, un guide de câble est optionnellement installé sur le corps. Chaque câble est maintenu entre le guide de câbles électriques et le pion déplaçable respectif. Le système est propre à s'adapter à plusieurs diamètres de câbles en fonction de la position du pion.

Néanmoins, la plage de diamètres de câbles que le système peut accepter reste limité.

On connait également de tels appareils de maintien de câbles électriques des documents DE 20 2020 102150 U1, NL 1 037 999 C2, DE 39 39 103 A1 et CN 104 033 659 A.

Le but de l'invention est donc de proposer un appareil de maintien de câbles électriques pour lequel l'amplitude des diamètres de câbles acceptés est plus étendue.

A cet effet, l'invention a pour objet un blochet de maintien selon la revendication 1.

Suivant des modes de réalisation facultatifs, le blochet est selon l'une quelconque des revendications 2 à 8.

L'invention concerne en outre un bogie d'un véhicule ferroviaire selon la revendication 9.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une coupe longitudinale du blochet avec des câbles électriques montés, la coupe étant réalisée selon un plan de la section des câbles électriques, et
[Fig 2] la figure 2 est une coupe du blochet de la figure 1, la coupe étant réalisée selon un plan II-II de la figure 1.

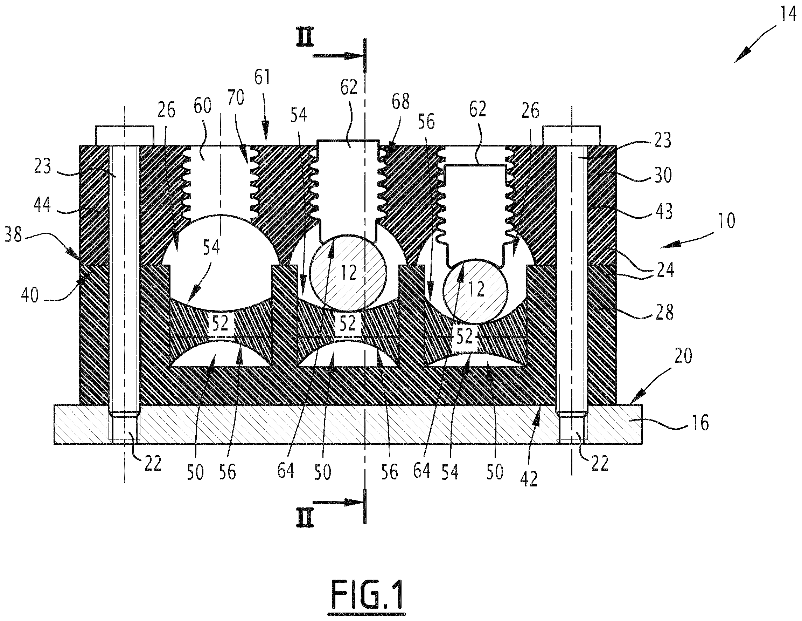

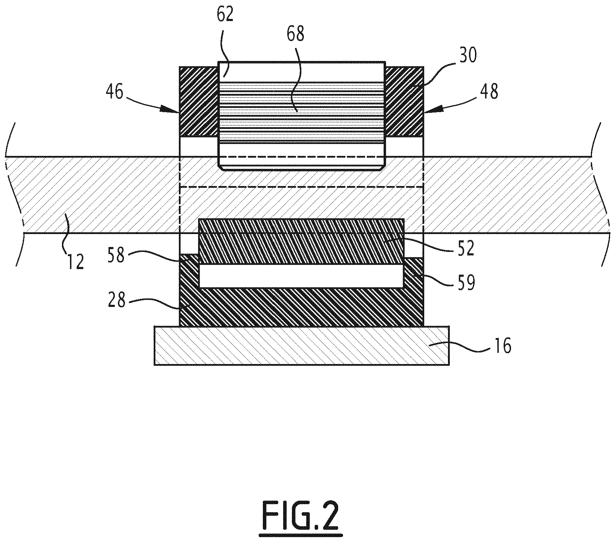

Un blochet 10 de maintien de câbles électriques 12 selon les figures 1 et 2 est utilisé par exemple au sein d'un véhicule 14, par exemple un véhicule ferroviaire 14. Le blochet 10 assure la retenue de câbles 12 électriques d'alimentation d'un moteur circulant entre un bogie 16 du véhicule 14 et la caisse du véhicule ferroviaire 14.

Le bogie 16 comprend une paroi de support 20 avantageusement plane, sur laquelle le blochet 10 est fixé. Deux trous taraudés 22 pour la réception de vis de fixation 23 du blochet sont prévus dans la paroi de support 20.

Le blochet 10 comporte un corps 24 délimitant trois passages parallèles 26 dans lesquels les câbles 12 sont reçus.

En variante non représentée, le corps 24 du blochet 10 délimite plus ou moins de trois passages parallèles 26, par exemple entre un et six passages parallèles 26.

Le corps 24 comporte une embase 28 et une bride 30 de forme parallélépipédique rectangle et accolées l'une à l'autre suivant deux faces de liaison respectives 38 et 40.

L'embase 28 est plaquée contre le bogie 16 suivant une face d'appui 42 opposée à la face de liaison 38.

L'embase 28 et la bride 30 comportent des perçages coaxiaux et traversant 43 et 44. Les perçages coaxiaux 43 et 44 sont traversés par les vis de fixation 23 dont une extrémité est reçue dans les trous taraudés 22 du bogie 16.

Les trois passages parallèles 26 pour des câbles 12 traversent de part en part le corps 24 et débouchent sur des faces latérales 46 et 48 du corps.

Ces passages 26 sont ménagés à l'interface entre l'embase 28 et la bride 30 et sont délimités partiellement dans l'une et l'autre.

L'embase 28 comporte trois évidements cylindriques 50 débouchant sur la face de liaison 38, chaque évidement 50 s'ouvrant dans un des passages 26. La section de chaque évidement 50 est rectangulaire.

Chaque évidement 50 reçoit un insert réversible 52 rapporté et complémentaire en section à l'évidement 50.

Chaque insert réversible 52 définit deux surfaces de support 54 et 56 en forme de gouttière de profondeurs distinctes sur ses deux faces opposées. L'une est orientée vers le passage 26 respectif pour la réception d'un câble 12 tandis que l'autre est cachée par l'embase 28 dans l'évidement 50 respectif. Le ratio entre les rayons de courbure des surfaces de support 54 et 56 est compris entre 1,5 et 4.

En variante non représentée, chaque insert réversible 52 est remplacé par un autre insert présentant des propriétés distinctes, notamment une surface de support définissant une gouttière de profondeur ou/et de courbure différente de celle des surfaces de support 54 et 56.

L'embase 28 comporte deux parois latérales 58 et 59 opposées visibles sur la figure 2 et délimitant chaque évidement 50. Les parois latérales 58 et 59 empêchent le déplacement latéral des inserts réversibles 52. La hauteur de chaque paroi latérale 58 ou 59 est inférieure à celle des inserts réversibles 52 au niveau du creux de la surface support 54 ou 56 afin que chaque câble 12 ne repose que sur l'insert réversible 52 respectif.

La bride 30 comporte trois conduits 60 en vis-à-vis des évidements 50, traversant la bride 30 de part en part d'une face supérieure 61 opposée à la face de liaison 40, jusqu'au passage 26 respectif dans lequel chacun s'ouvre.

Chaque conduit 60 est de section rectangulaire et reçoit un pion 62 déplaçable de part en part en son sein jusque dans le passage 26.

Chaque pion 62 est de forme nominale cylindrique de section rectangulaire et définit une section nominale complémentaire à la section du conduit 60 respectif en tout point de sa longueur.

Chaque pion 62 délimite à une extrémité une surface d'appui 64 avec le câble 12 en forme de gouttière et à son autre extrémité une face plane d'appui manuel.

Il comporte une denture externe 68 répartie sur deux faces externes opposées en saillie sur sa surface latérale. La denture externe 68 coopère avec une denture interne complémentaire 70 présente au sein des conduits 60.

Les dentures interne 70 et externe 68 comportent des profils en saillie et en creux complémentaires permettant la retenue de chaque pion 62 dans le conduit 60 respectif et propres à être déformés élastiquement pour le déplacement du pion 62 suivant la longueur du conduit 60.

En variante non représentée, les dentures interne 70 et externe 68 sont du type anti-retour, aussi appelé unidirectionnel, empêchant chaque pion 62 de s'écarter du câble 12 sur lequel il appuie.

Lors du montage, les inserts réversibles 52 sont insérés dans les évidements 50 en fonction du câble 12 respectif de manière à ce que la surface de support 54 ou 56 apparente dans le passage 26 de chaque insert réversible 52 soit adaptée à la section dudit câble 12.

L'embase 28 est ensuite positionnée sur le boggie 16.

Chaque câble 12 est positionné sur l'insert réversible 52 respectif via la surface de support 54 ou 56 apparente dans le passage 26.

La bride 30 est ensuite placée sur l'embase 28 de manière à former le corps 24.

Les vis de fixation 23 sont alors engagées dans les perçages coaxiaux 43 et 44 de la bride 30 et de l'embase 28 et sont ensuite vissées au bogie 16 via les trous taraudés 22.

La fermeture du blochet 10 est assurée par serrage selon un couple prédéfini des vis de fixation 23 dans les trous taraudés 22. Les têtes des vis de fixation 23 sont en appui sur la bride 30.

Les pions 62 sont engagés dans les conduits 60 et enfoncés individuellement provoquant une déformation élastique des dentures externe 68 et interne 70, jusqu'à ce que chaque pion 62 soit en butée sur le câble 12 via la surface d'appui 64. Chaque câble 12 est alors enserré entre la surface d'appui 64 et la surface de support 54 ou 56. Les pions 62 sont alors en position de pincement.

Ainsi l'ensemble des sections de câble 12 admissibles par le blochet 10 est moins limité car conditionné à la fois par l'amplitude de mouvement du pion 62 et par la surface de support 54 ou 56 apparente dans le passage 26 de l'insert réversible 52. Le blochet 10 admet donc une plus grande amplitude de sections de câble 12.

De plus, les surfaces de support 54 et 56 et la surface d'appui 64 en forme de gouttières s'adaptent bien aux câbles 12 de section circulaire ou ovale et limitent l'écrasement desdits câbles 12.

En outre, la section nominale de chaque pion 62 étant inférieure à la section des conduits 60, les pions 62 traversent les conduits 60 de part en part par simple poussée axiale et sont donc démontables et réutilisables, et ce, même lorsque les dentures interne 70 et externe 68 sont du type anti-retour.

Pour démonter les pions 62, le dévissage des vis de fixation 23 permet de désolidariser la bride 30 de l'embase 28. Chaque pion 62 ne pince alors plus le câble 12, il est alors possible de démonter chaque pion 62 par poussée axiale hors de chaque évidement 50.

## Revendications

1. Blochet (10) de maintien d'au moins un câble (12) électrique apte à être fixé à un support (16), le blochet (10) comprenant un corps (24) dans lequel est ménagé au moins un passage (26) pour le ou chaque câble (12) électrique, et
pour chaque passage (26), un pion (62) déplaçable transversalement dans le passage (26) par rapport au corps (24) entre :
- une position de pincement dans laquelle le câble (12) associé au passage (26), est enserré entre une surface d'appui (64) et une surface de support (54, 56) portée par le corps (24), chaque pion délimitant à une extrémité la surface d'appui (64), et
- une position escamotée, dans laquelle la circulation du câble (12) associé au passage (26) est libre, le pion (62) étant écarté de la surface de support (54, 56), la ou chaque surface de support (54, 56) est délimitée par un insert réversible (52) rapporté dans un évidement (50) du corps (24) s'ouvrant dans le passage (26) respectif,
le ou chaque insert réversible (52) définissant sur deux de ses faces opposées, deux surfaces de support (54, 56) en forme de gouttière de profondeurs distinctes l'une de l'autre, la ou chaque surface de support (54, 56) apparente dans le passage (26) respectif étant propre à porter le câble (12) respectif.

2. Blochet (10) selon la revendication 1, **caractérisé en ce que** le corps (24) comprend au moins une embase (28) dans laquelle est délimité le ou chaque évidement (50) et une bride (30) portant le ou chaque pion (62).

3. Blochet (10) selon la revendication 2, **caractérisé en ce que** l'embase (28) et la bride (30) comportent des perçages coaxiaux traversant (43, 44) de réception de vis de fixation (23) sur un support (16).

4. Blochet (10) selon l'une quelconque des revendications précédentes, **caractérisé en ce que** le corps (24) est traversé pour le ou chaque passage (26), par un conduit (60) s'ouvrant dans le passage (26), le ou chaque pion (62) étant déplaçable par rapport au corps (24) au sein du conduit (60) respectif.

5. Blochet (10) selon la revendication 4, **caractérisé en ce que** la section nominale du ou de chaque pion (62) en tout point de sa longueur, est égale ou inférieure à la section du conduit (60) respectif.

6. Blochet (10) de maintien selon la revendication 4 ou 5, **caractérisé en ce que** le ou chaque pion (62) comporte au moins une denture externe (68), et le ou chaque conduit (60) comporte au moins une denture interne (70) destinée à coopérer avec la denture externe (68) du pion (62) respectif pour sa retenue.

7. Blochet (10) selon la revendication 6, **caractérisé en ce que** la denture interne (70) du ou de chaque conduit (60) et la denture externe (68) du ou de chaque pion (62), comportent un ensemble de crans propres à être déformés élastiquement pour permettre le déplacement du ou de chaque pion (62) dans le conduit (60) respectif.

8. Blochet (10) selon l'une quelconque des revendications précédentes, **caractérisé en ce que** le ou chaque pion (62) définit la première surface d'appui (64) respective en forme de gouttière.

9. Bogie (16) d'un véhicule (14) ferroviaire comprenant une paroi de support (20) et un blochet (10) selon l'une quelconque des revendications précédentes, le blochet étant fixé sur ladite paroi de support (20).

## Patentansprüche

1. Halteblock (10) zum Halten mindestens eines elektrischen Kabels (12), der geeignet ist, an einer Stütze (16) befestigt zu werden, wobei die Halteblock (10) ein Gehäuse (24) umfasst, in dem mindestens ein Durchgang (26) für das oder jedes elektrische Kabel (12) und für jeden Durchgang (26) ein Stift (62) ausgebildet ist, der in dem Durchgang (26) in Bezug auf das Gehäuse (24) quer verschiebbar ist, zwischen:
- einer Klemmstellung, in der das Kabel (12), das mit dem Durchgang (26) assoziiert ist, zwischen einer Anlagefläche (64) und einer Stützfläche (54, 56), die von dem Gehäuse (24) getragen wird, eingeklemmt ist, wobei jeder Stift an einem Ende die Anlagefläche (64) begrenzt, und
- einer zurückgezogenen Stellung, in der die Bewegung des Kabels (12), das mit dem Durchgang (26) assoziiert ist, frei ist, wobei der Stift (62) von der Stützfläche (54, 56) beabstandet ist,
die oder jede Stützfläche (54, 56) durch einen umkehrbaren Einsatz (52) begrenzt ist, der in eine Aussparung (50) des Gehäuses (24) eingesetzt ist, die sich in den jeweiligen Durchgang (26) öffnet,
der oder jeder umkehrbare Einsatz (52) auf zwei seiner gegenüberliegenden Seiten zwei rinnenförmige Stützflächen (54, 56) mit untereinander verschiedenen Tiefen definiert,
die oder jede freiliegende Stützfläche (54, 56) in dem jeweiligen Durchgang (26) geeignet ist, um das jeweilige Kabel (12) zu tragen.

2. Halteblock (10) nach Anspruch 1, **dadurch gekennzeichnet, dass** das Gehäuse (24) mindestens einen Sockel (28), in dem die oder jede Aussparung (50) begrenzt ist, und einen Flansch (30), der den oder jeden Stift (62) trägt, umfasst.

3. Halteblock (10) nach Anspruch 2, **dadurch gekennzeichnet, dass** der Sockel (28) und der Flansch (30) koaxiale Durchgangsbohrungen (43, 44) zum Aufnehmen von Befestigungsschrauben (23) an einem Träger (16) umfassen.

4. Halteblock (10) nach einem der vorherigen Ansprüche, **dadurch gekennzeichnet, dass** das Gehäuse (24) für den oder jeden Durchgang (26) von einem Kanal (60) durchquert wird, der sich in den Durchgang (26) öffnet, wobei der oder jeder Stift (62) in Bezug auf das Gehäuse (24) innerhalb des jeweiligen Kanals (60) verschiebbar ist.

5. Halteblock (10) nach Anspruch 4, **dadurch gekennzeichnet, dass** der Nennquerschnitt von dem oder jedem Stift (62) an jedem Punkt seiner Länge gleich wie oder kleiner als der Querschnitt des jeweiligen Kanals (60) ist.

6. Halteblock (10) nach Anspruch 4 oder 5, **dadurch gekennzeichnet, dass** der oder jeder Stift (62) mindestens eine Außenverzahnung (68) umfasst und der oder jeder Kanal (60) mindestens eine Innenverzahnung (70) umfasst, die dazu bestimmt ist, mit der Außenverzahnung (68) des jeweiligen Stifts (62) zusammenzuwirken, um diesen zurückzuhalten.

7. Halteblock (10) nach Anspruch 6, **dadurch gekennzeichnet, dass** die Innenverzahnung (70) von dem oder jedem Kanal (60) und die Außenverzahnung (68) von dem oder jedem Stift (62) eine Anordnung von Rasten aufweisen, die geeignet sind, um elastisch verformt zu werden, um die Verschiebung von dem oder jedem Stift (62) in dem jeweiligen Kanal (60) zu ermöglichen.

8. Halteblock (10) nach einem der vorherigen Ansprüche, **dadurch gekennzeichnet, dass** der oder jeder Stift (62) die jeweilige erste Anlagefläche (64) rinnenförmig definiert.

9. Drehgestell (16) eines Schienenfahrzeugs (14), umfassend eine Stützwand (20) und einen Halteblock (10) nach einem der vorherigen Ansprüche, wobei der Halteblock an der Stützwand (20) befestigt ist.

## Claims

1. A block (10) for holding at least one electrical cable (12) suitable for being fixed to a support (16), the block (10) comprising a body (24) in which there is formed at least one passage (26) for the or each electrical cable (12), and for each passage (26), a pin (62) movable transversely in the passage (26) relative to the body (24) between:
- a clamping position in which the cable (12) associated with the passage (26) is clamped between a bearing surface (64) and a support surface (54, 56) carried by the body (24), each pin delimiting the bearing surface (64) at one end, and
- a retracted position, in which the flow of the cable (12) associated with the passage (26) is free, the pin (62) being moved away from the support surface (54, 56),
the or each support surface (54, 56) is delimited by a reversible insert (52) fitted into a recess (50) of the body (24) opening into the respective passage (26),
the or each reversible insert (52) defining, on two of its opposite faces, two channel-shaped support surfaces (54, 56) of different depths,
the or each support surface (54, 56) exposed in the respective passage (26) being suitable for supporting the respective cable (12).

2. The block (10) according to claim 1, **characterised in that** the body (24) comprises at least one base (28) in which the or each recess (50) is bounded, and a flange (30) carrying the or each pin (62).

3. The block (10) according to claim 2, **characterised in that** the base (28) and the flange (30) have coaxial through-holes (43, 44) for receiving fastening screws (23) on a support (16).

4. The block (10) according to any one of the preceding claims, **characterised in that** the body (24) is traversed, for the or each passage (26), by a duct (60) opening into the passage (26), the or each pin (62) being movable relative to the body (24) within the respective duct (60).

5. The block (10) according to claim 4, **characterised in that** the nominal crosssection of the or each pin (62) at any point along its length is less than or equal to the crosssection of the respective duct (60).

6. The block (10) according to claim 4 or 5, **characterised in that** the or each pin (62) comprises at least one external toothing (68), and the or each duct (60) comprises at least one internal toothing (70) intended to cooperate with the external toothing (68) of the respective pin (62) for the retention thereof.

7. The block (10) according to claim 6, **characterised in that** the internal toothing (70) of the or each duct (60) and the external toothing (68) of the or each pin (62) comprise a set of notches capable of being resiliently deformed to allow the movement of the or each pin (62) within the respective duct (60).

8. The block (10) according to any one of the preceding claims, **characterised in that** the or each pin (62) defines the respective first bearing surface (64) in the form of a channel.

9. A bogie (16) for a rail vehicle (14) comprising a support wall (20) and a block (10) according to any one of the preceding claims, the block being fastened to the said support wall (20).
